# EUROPEAN PATENT APPLICATION

(11) **EP 4 068 772 A1**
(43) Date of publication of application: **05.10.2022**
(21) Application number: 20896638.2
(22) Date of filing: 02.12.2020
(51) Int. Cl.: H04N 13/302

(54) **3D DISPLAY DEVICE, METHOD AND TERMINAL**

(30) Priority: 05.12.2019 CN 201911231290
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133327
(87) International publication number: WO 2021/110033

(57) **Abstract**

The present application relates to a 3D display technology, and discloses a 3D display device, comprising: a multi-viewpoint 3D display screen, comprising a plurality of composite pixels, wherein each composite pixel in the plurality of composite pixels comprises a plurality of composite subpixels, and each composite subpixel in the plurality of composite subpixels comprises a plurality of subpixels corresponding to a plurality of viewpoints; an eye positioning apparatus, configured to acquire spatial positions of eyes of a user; and a 3D processing apparatus, configured to determine the viewpoints by the spatial positions of the eyes of the user, and render the subpixels, corresponding to the viewpoints, in the plurality of composite subpixels based on received 3D signals. According to the above 3D display device, the flexibility of 3D display can be improved. The present application further discloses a 3D display method, a 3D display terminal, a computer-readable storage medium and a computer program product.

## Description

The present application claims priority to the Chinese Patent Application with an application number of 201911231290X and a title of "3D Display Device, Method and Terminal", filed to China National Intellectual Property Administration on December 5th, 2019, the disclosures of which are hereby incorporated by reference.

### TECHNICAL FIELD

The present application relates to a 3D display technology, and for example, relates to a 3D display device, a 3D display method and a 3D display terminal.

### BACKGROUND

At present, when 3D display is performed, to-be-displayed contents are usually displayed towards a preset fixed display orientation, leading to single display manner and low flexibility, and affecting a display effect.

### SUMMARY

In order to provide a basic understanding of some aspects of the disclosed embodiments, a brief summary of the embodiments is given below. The summary is not intended to identify key/important components or describe the scope of protection of the embodiments, but to be a preface to the following detailed description.

Embodiments of the present application are intended to provide a 3D display device, a 3D display method, a 3D display terminal, a computer-readable storage medium and a computer program product, so as to improve the flexibility of 3D display.

In one solution, a 3D display device is provided, comprising: a multi-viewpoint 3D display screen, comprising a plurality of composite pixels, wherein each composite pixel in the plurality of composite pixels comprises a plurality of composite subpixels, and each composite subpixel in the plurality of composite subpixels comprises a plurality of subpixels corresponding to a plurality of viewpoints; an eye positioning apparatus, configured to acquire spatial positions of eyes of a user; and a 3D processing apparatus, configured to determine the viewpoints by the spatial positions of the eyes of the user, and render the subpixels, corresponding to the viewpoints, in the plurality of composite subpixels based on received 3D signals.

In the embodiments of the present disclosure, eye positioning data is acquired in real time by utilizing the eye positioning apparatus, and the 3D display can be adjusted in time according to viewing situations, so as to realize the 3D display with high flexibility and provide good viewing experience for the user. In addition, display resolution of the multi-viewpoint 3D display screen is defined in a manner of the composite pixels, and therefore, the display resolution defined by the composite pixels is taken as a consideration factor when in transmission and display, so that the reduction of transmission and a calculating amount for rendering can be effectively realized, and an excellent display effect is still realized. Therefore, the 3D display with high quality can be realized.

In some embodiments, the eye positioning apparatus is configured to acquire the spatial positions of eyes of at least one user.

In some embodiments, the 3D processing apparatus is configured to render the subpixels, corresponding to a single viewpoint, in the plurality of composite subpixels in response to that one of both eyes of each user in at least one user is located at the single viewpoint or the both eyes are respectively located at the single viewpoint.

In the embodiment, accurate display is presented according to viewpoint positions, at which the both eyes of the user are respectively located.

In some embodiments, the 3D processing apparatus is further configured to: render at least one subpixel, which is adjacent to the subpixels corresponding to the single viewpoint.

In the embodiment, display brightness is enhanced by additionally rendering one or two subpixels, which is/are adjacent to the subpixels corresponding to the single viewpoint, at which the eyes are located, so that the display effect adapts to a high light environment; and also probably, a deviation or moving trend of the user is calculated according to the eye positioning data, and accordingly, the subpixels, corresponding to the viewpoint positions, to which the user probably moves, are rendered, so as to actively or dynamically adapt to the viewing situations to acquire excellent viewing experience.

In some embodiments, the 3D processing apparatus is configured to render the subpixels, corresponding to two viewpoints, in the plurality of composite subpixels in response to that one of both eyes of each user in at least one user is located between the two viewpoints or the both eyes are respectively located between the two viewpoints.

In the embodiment, it can be realized that a clear display effect can also be realized even though the eyes of the user stretch across the viewpoints; and also probably, the deviation or moving trend of the user is calculated according to the eye positioning data, and accordingly, the subpixels, corresponding to the viewpoint positions, to which the user probably moves, are rendered, or accordingly, the subpixels, corresponding to the viewpoint positions, through which the user passes in a moving process, are rendered, so as to actively or dynamically adapt to the viewing situations to acquire the excellent viewing experience.

In some embodiments, the 3D display device further comprises a face detecting apparatus, configured to detect face information of at least one user.

In the embodiments of the present disclosure, by detecting the face information of the user, an identity of the user may be identified, which, for example, is favorable in a following situation; namely, both eyes or a face of the user are detected, and a pupil distance or other biological characteristic information of the user is known, so that the viewpoint positions, at which the both eyes are located, can be calculated by utilizing the known information, so as to further improve face identification speed or eye positioning speed.

In some embodiments, the eye positioning apparatus is configured to acquire the spatial positions of both eyes of each of at least two users.

In the embodiments of the present disclosure, by acquiring the viewpoint positions of the both eyes of each of at least two users in real time, the 3D display, which is accurate and customized and is different when necessary, can be provided for the at least two users respectively, so that each user can acquire the excellent viewing experience.

In some embodiments, the 3D processing apparatus is a Field Programmable Gate Array (FPGA) chip or an Application Specific Integrated Circuit (ASIC) chip or an FPGA chipset /an ASIC chipset.

In some embodiments, each composite subpixel in the plurality of composite subpixels comprises a plurality of subpixels arranged in row or in column.

In another solution, a 3D display method is provided, comprising: acquiring spatial positions of eyes of a user; determining viewpoints by the spatial positions of the eyes of the user; and rendering subpixels, corresponding to the viewpoints, in a plurality of composite subpixels in a multi-viewpoint 3D display screen based on 3D signals, wherein the multi-viewpoint 3D display screen comprises a plurality of composite pixels, each composite pixel in the plurality of composite pixels comprises a plurality of composite subpixels, and each composite subpixel in the plurality of composite subpixels comprises a plurality of subpixels corresponding to a plurality of viewpoints.

In some embodiments, acquiring the spatial positions of the eyes of the user and determining the viewpoints by the spatial positions of the eyes of the user comprises: acquiring the spatial positions of the eyes of at least one user; and determining the viewpoints, at which the eyes of each user in at least one user are located, by the spatial positions of the eyes of at least one user.

In some embodiments, rendering the subpixels, corresponding to the viewpoints, in the plurality of composite subpixels in the multi-viewpoint 3D display screen, based on the 3D signals comprises: rendering subpixels, corresponding to the single viewpoint, in the plurality of composite subpixels, in response to that one of both eyes of each user in at least one user is located at a single viewpoint or the both eyes are respectively located at single viewpoint.

In some embodiments, rendering the subpixels, corresponding to the viewpoints, in the plurality of composite subpixels in the multi-viewpoint 3D display screen based on the 3D signals comprises: rendering subpixels, corresponding to the single viewpoint, in the plurality of composite subpixels, and at least one subpixel, which is adjacent to the subpixels corresponding to the single viewpoint, in response to that one of the both eyes of each user in at least one user is located at a single viewpoint or the both eyes are respectively located at single viewpoint.

In some embodiments, rendering the subpixels, corresponding to the viewpoints, in the plurality of composite subpixels in the multi-viewpoint 3D display screen, based on the 3D signals comprises: rendering subpixels, corresponding to two viewpoints, in the plurality of composite subpixels in response to that one of both eyes of each user in at least one user is located between the two viewpoints or both eyes are respectively located between the two viewpoints.

In some embodiments, the 3D display method further comprises: detecting face information of at least one user.

In some embodiments, detecting the face information of at least one user comprises: detecting face information of at least two users.

In another solution, a 3D display terminal is provided, comprising a processor and a memory in which program instructions are stored, and further comprising a multi-viewpoint 3D display screen; the multi-viewpoint 3D display screen comprises a plurality of composite pixels, each composite pixel in the plurality of composite pixels comprises a plurality of composite subpixels, and each composite subpixel in the plurality of composite subpixels comprises a plurality of subpixels corresponding to a plurality of viewpoints; and the processor is configured to execute the method in any one of claims 10-16 when the program instructions are executed.

In some embodiments, the 3D display terminal is a smart television, an intelligent cell phone, a tablet computer, a personal computer or a wearable device.

In the computer-readable storage medium provided by the embodiments of the present disclosure, computer-executable instructions are stored; and the above computer-executable instructions are configured to execute the above 3D display method.

The computer program product provided by the embodiments of the present disclosure comprises computer programs stored in the computer-readable storage medium; and the above computer programs comprise the program instructions, and make a computer execute the above 3D display method when the program instructions are executed by the computer

The 3D display device, the 3D display method, the 3D display terminal, the computer-readable storage medium and the computer program product, provided by the embodiments of the present disclosure, may realize the following technical effect:
The flexibility of the 3D display is improved.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1A and Fig. 1B are structural schematic diagrams of a 3D display device according to embodiments of the present disclosure;
Fig. 2 is a structural schematic diagram of hardware of the 3D display device according to the embodiments of the present disclosure;
Fig. 3 is a structural schematic diagram of software of the 3D display device shown in Fig. 2;
Fig. 4A and Fig. 4B are schematic diagrams of a composite pixel according to the embodiments of the present disclosure;
Fig. 5A and Fig. 5B are schematic diagrams of rendering executed in response to viewpoint positions of a user according to the embodiments of the present disclosure, wherein both eyes of the user are respectively located in single viewpoint;
Fig. 5C is a schematic diagram of rendering executed in response to viewpoint positions of a user according to the embodiments of the present disclosure, wherein one of both eyes of the user stretches across viewpoints, and the other one is located in a single viewpoint;
Fig. 5D is a schematic diagram of rendering executed in response to viewpoint positions of a user according to the embodiments of the present disclosure, wherein the viewpoint positions of the user move;
Fig. 5E is a schematic diagram of rendering executed in response to viewpoint positions of users according to the embodiments of the present disclosure, wherein two users are included;
Fig. 6 is a schematic diagram of steps of a 3D display method according to the embodiments of the present disclosure;
Fig. 7 is a schematic diagram of steps of a 3D display method according to the embodiments of the present disclosure;
Fig. 8 is a schematic diagram of steps of a 3D display method according to the embodiments of the present disclosure;
Fig. 9 is a schematic diagram of steps of a 3D display method according to the embodiments of the present disclosure;
Fig. 10 is a schematic diagram of steps of a 3D display method according to the embodiments of the present disclosure;
Fig. 11 is a schematic diagram of steps of a 3D display method according to the embodiments of the present disclosure;
Fig. 12 is a schematic diagram of steps of a 3D display method according to the embodiments of the present disclosure; and
Fig. 13 is a structural schematic diagram of a 3D display terminal according to the embodiments of the present disclosure.

### Reference numerals:

100: 3D display device; 101: processor; 122: register; 110: multi-viewpoint 3D display screen; 130: 3D processing apparatus; 131: buffer; 140: video signal interface; 150: eye positioning apparatus; 158: face detecting apparatus; CP: composite pixel; CSP: composite subpixel; 200: 3D display device; 201: processor; 202: external memory interface; 203: memory; 204: USB interface; 205: charging management module; 206: power supply management module; 207: battery; 208: mobile communication module; 209: antenna; 210: wireless communication module; 211: antenna; 212: audio module; 213: loudspeaker; 214: telephone receiver; 215: microphone; 216: earphone jack; 217: button; 218: motor; 219: indicator; 220: SIM card interface; 221: shooting apparatus; 222: register; 223: Graphics Processing Unit (GPU); 224: codec; 230: sensor module; 2301: proximity light sensor; 2302: ambient light sensor; 2303: pressure sensor; 2304: air pressure sensor; 2305: magnetic sensor; 2306: gravity sensor; 2307: gyroscope sensor; 2308: acceleration sensor; 2309: distance sensor; 2310: temperature sensor; 2311: fingerprint sensor; 2312: touch sensor; 2313: bone conduction sensor; 310: application program layer; 320: framework layer; 330: core class library and runtime; 340: kernel layer; 400: composite pixel; 410, 420 and 430: composite subpixels arranged in a single column; 411, 421 and 431: subpixels arranged in a single row; 440, 450 and 460: composite subpixels arranged in a single row; 441, 451 and 461: subpixels arranged in a single column; 1300: 3D display terminal; 1310: processor; 1311: memory; 1312: communication interface; and 1313: bus.

### Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

In one solution, a 3D display device is provided, comprising: a multi-viewpoint 3D display screen (such as: a multi-viewpoint naked eye 3D display screen), comprising m×n composite pixels; a video signal interface configured to receive images of 3D signals; a 3D processing apparatus; and an eye positioning apparatus, configured to acquire eye positioning data in real time, wherein each composite pixel comprises a plurality of composite subpixels, each composite subpixel comprises i subpixels of the same color, corresponding to i viewpoints, and i>3. The 3D processing apparatus is configured to, according to the eye positioning data, render the subpixels, determined by the eye positioning data, in each composite subpixel based on the images of the 3D signals.

In embodiments of the present disclosure, the eye positioning data is acquired in real time by utilizing the eye positioning apparatus, and 3D display can be adjusted in time according to viewing situations, so as to realize the 3D display with high flexibility and provide good viewing experience for a user. In addition, display resolution of the multi-viewpoint 3D display screen is defined in a manner of the composite pixels, and therefore, the display resolution defined by the composite pixels is taken as a consideration factor when in transmission and display, so that the reduction of transmission and a calculating amount for rendering can be effectively realized, and an excellent display effect is still realized. Therefore, the 3D display with high quality can be realized.

In some embodiments, the eye positioning apparatus is configured to detect viewpoint positions, at which eyes of at least one user are located, in real time.

In some embodiments, the 3D processing apparatus is configured to render the subpixels, corresponding to a single viewpoint, in each composite subpixel in response to that one of both eyes of each user is located at the single viewpoint or the both eyes are respectively located at the single viewpoint.

In the embodiment, accurate display is presented according to the viewpoint positions, at which the both eyes of the user are respectively located.

In some embodiments, the 3D processing apparatus is further configured to render one or two subpixels, adjacent to the subpixels corresponding to the single viewpoint.

In the embodiment, display brightness is enhanced by additionally rendering one or two subpixels, which is/are adjacent to the subpixels corresponding to the single viewpoint, at which the eyes are located, so that the display effect adapts to a high light environment; and also probably, a deviation or moving trend of the user is calculated according to the eye positioning data, and accordingly, the subpixels, corresponding to the viewpoint positions, to which the user probably moves, are rendered, so as to actively or dynamically adapt to the viewing situations to acquire excellent viewing experience.

In some embodiments, the 3D processing apparatus is configured to render the subpixels, corresponding to viewpoints stretched across, in each composite subpixel in response to that one of both eyes of each user is located between two viewpoints (stretches across two viewpoints) or the both eyes stretch across the viewpoints.

In the embodiment, it can be realized that a clear display effect can also be realized even though the eyes of the user stretch across the viewpoints; and also probably, the deviation or moving trend of the user is calculated according to the eye positioning data, and accordingly, the subpixels, corresponding to the viewpoint positions, to which the user probably moves, are rendered, or accordingly, the subpixels, corresponding to the viewpoint positions, through which the user passes in a moving process, are rendered, so as to actively or dynamically adapt to the viewing situations to acquire the excellent viewing experience.

In some embodiments, the 3D display device further comprises a face detecting apparatus configured to detect face information of at least one user.

In the embodiments of the present disclosure, by detecting the face information of the user, an identity of the user may be identified, which, for example, is favorable in a following situation; namely, the both eyes or a face of the user are detected, and a pupil distance or other biological characteristic information of the user is known, so that the viewpoint positions, at which the both eyes are located, can be calculated by utilizing the known information, so as to further improve face identification speed or eye positioning speed.

In some embodiments, the eye positioning apparatus is configured to acquire the viewpoint positions, at which the both eyes of each of at least two users are located, in real time.

In the embodiments of the present disclosure, by acquiring the viewpoint positions of the both eyes of each of at least two users in real time, the 3D display, which is accurate and customized and is different when necessary, can be provided for the at least two users respectively, so that each user can acquire the excellent viewing experience.

In some embodiments, the 3D processing apparatus is an FPGA chip or an ASIC chip or an FPGA chipset/an ASIC chipset.

In some embodiments, each composite subpixel comprises a plurality of subpixels in a single row or in a single column.

In another solution, a 3D display method used for the multi-viewpoint 3D display screen is provided. The multi-viewpoint 3D display screen comprises m×n composite pixels, wherein each composite pixel comprises a plurality of composite subpixels, each composite subpixel comprises i subpixels of the same color, corresponding to i viewpoints, and i>3. The 3D display method comprises: transmitting images of 3D signals; acquiring eye positioning data in real time; and according to the eye positioning data, rendering subpixels, determined by the eye positioning data, in each composite subpixel based on images of 3D signals.

In some embodiments, acquiring the eye positioning data in real time comprises: detecting viewpoint positions, at which both eyes of at least one user are located, in real time.

In some embodiments, a rendering step comprises: in response to that one of the both eyes of each user is located at a single viewpoint or the both eyes are respectively located at a single viewpoint, rendering subpixels, corresponding to the single viewpoint, in each composite subpixel.

In some embodiments, a rendering step comprises: in response to that one of the both eyes of each user is located at a single viewpoint or the both eyes are respectively located at single viewpoint, rendering subpixels, corresponding to the single viewpoint, in each composite subpixel, and one or two subpixels, which is/are adjacent to the subpixels corresponding to the single viewpoint.

In some embodiments, a rendering step comprises: in response to that one of the both eyes of each user stretches across the viewpoints or the both eyes stretch across the viewpoints, rendering subpixels, corresponding to the viewpoints stretched across, in each composite subpixel.

In some embodiments, the 3D display method further comprises: detecting face information of at least one user.

In some embodiments, detecting the face information of at least one user comprises detecting face information of at least two users.

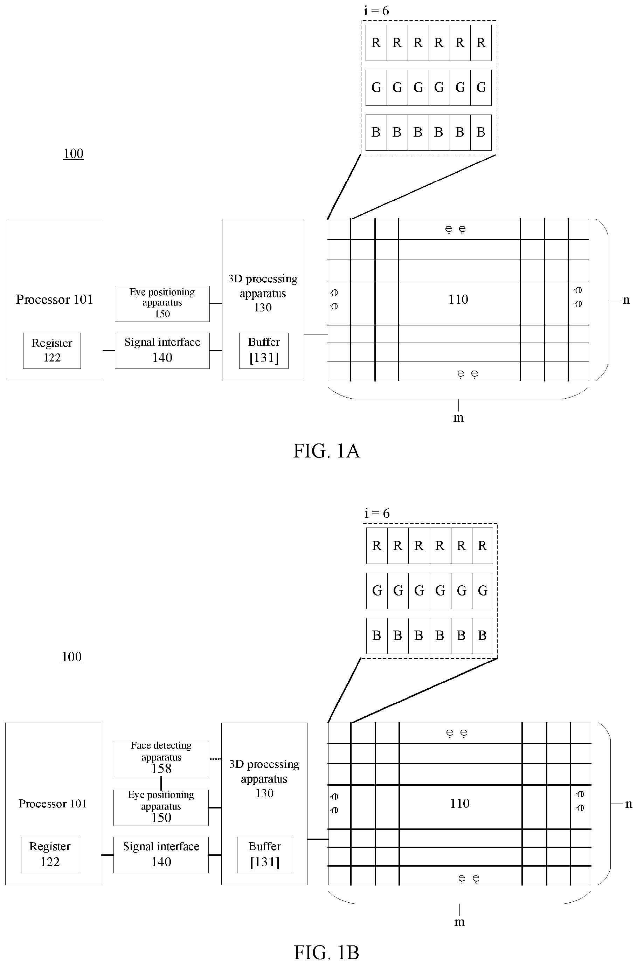

Fig. 1A shows a structural schematic diagram of a 3D display device according to the embodiments of the present disclosure. With reference to Fig. 1A, a 3D display device 100, a multi-viewpoint 3D display screen 110, a 3D processing apparatus 130, a video signal interface 140 configured to receive images of 3D signals, and an eye positioning apparatus 150 are provided.

The multi-viewpoint 3D display screen 110 may comprise a display panel and a grating (not marked) covered on the display panel. In an embodiment shown in Fig. 1A, the multi-viewpoint 3D display screen 110 comprises m×n composite pixels, so as to define display resolution of m×n. As shown in Fig. 1A, the multi-viewpoint 3D display screen 110 comprises m columns and n rows of composite pixels, so as to define the display resolution of m×n.

In some embodiments, the display resolution of m×n may be resolution over Full High Definition (FHD), comprising but not limited to 1920×1080, 1920×1200, 2048×1280, 2560×1440, 3840×2160 and the like.

In some embodiments, the 3D processing apparatus is in communication connection with the multi-viewpoint 3D display screen.

In some embodiments, the 3D processing apparatus is in communication connection with a driving apparatus of the multi-viewpoint 3D display screen.

In some embodiments, each composite pixel comprises a plurality of composite subpixels, each composite subpixel comprises i subpixels of the same color, corresponding to i viewpoints, and i>3. In the embodiment shown in Fig. 1A, i=6, however, it may be thought of that i is other numerical values. In the shown embodiment, the multi-viewpoint 3D display screen may correspondingly have i (i=6) viewpoints (VI-V6), however, it may be thought of that the multi-viewpoint 3D display screen may correspondingly have more or less viewpoints.

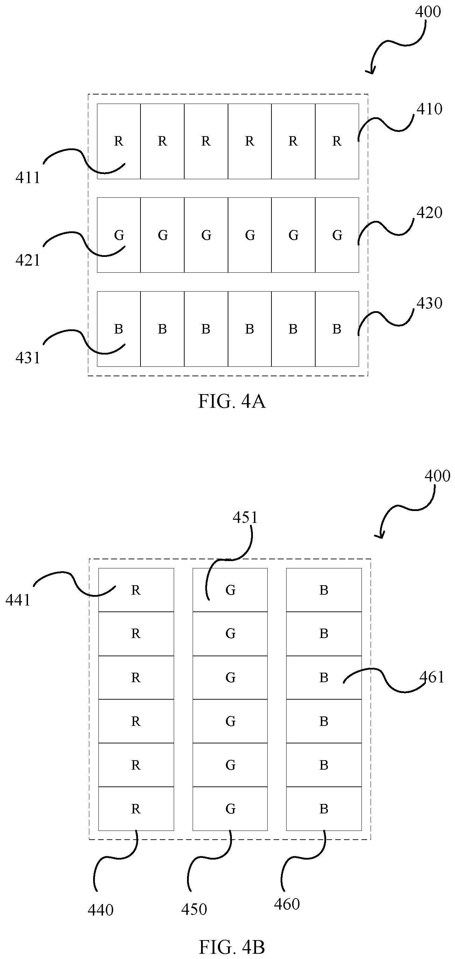

Combining with reference to Fig. 1A and Fig. 4A, in the shown embodiments, each composite pixel comprises three composite subpixels, and each composite subpixel comprises six subpixels of the same color, corresponding to six viewpoints (i=6). The three composite subpixels respectively correspond to three colors: red (R), green (G) and blue (B).

As shown in Fig. 4A, three composite subpixels 410, 420 and 430 in a composite pixel 400 are arranged in a single column. Each of the composite subpixels 410, 420 and 430 comprises subpixels 411, 421 and 431 arranged in a single row. However, it may be thought of different arrangement manners of the composite subpixels in the composite pixel or different arrangement forms of the subpixels in the composite subpixel.

As shown in Fig. 4B, three composite subpixels 440, 450 and 460 in the composite pixel 400 are arranged in a single row. Each of the composite subpixels 440, 450 and 460 comprises subpixels 441, 451 and 461 arranged in a form of a single column.

In some embodiments, as shown in Fig. 1A and Fig. 1B, the 3D display device 100 is provided with a single 3D processing apparatus 130. The single 3D processing apparatus 130 is configured to simultaneously process rendering for each composite subpixel of each composite pixel of the 3D display screen 110.

In some other embodiments that are not shown, the 3D display device 100 may be provided with, for example, two, three or more 3D processing apparatuses 130, and the 3D processing apparatuses 130 are configured to process the rendering for each composite subpixel of each composite pixel of the 3D display screen 110 in a parallel/serial manner or a parallel-serial combination manner.

Those skilled in the art should understand that two, three or more 3D processing apparatuses may be distributed in other manners and are configured to parallelly process the multi-row and multi-column composite pixels or composite subpixels of the 3D display screen 110, which falls into the scope of the embodiments of the present disclosure.

In some embodiments, the 3D processing apparatus 130 may further comprise a buffer 131, so as to buffer the received images.

In some embodiments, the 3D processing apparatus is an FPGA chip or an ASIC chip or an FPGA chipset or an ASIC chipset.

Continuing to refer to Fig. 1A, the 3D display device 100 further comprise a processor 101 which is in communication connection to the 3D processing apparatus 130 through the video signal interface 140. In some embodiments, the processor 101 is comprised in a computer or an intelligent terminal, such as a mobile terminal, or serves as a processor unit thereof. However, it may be thought of that, in some other embodiments, the processor 101 may be arranged at the outer part of the 3D display device, and for example, the 3D display device may be a multi-viewpoint 3D display provided with the 3D processing apparatus, for example, a non-intelligent 3D television, and for example, a mobile television arranged in public traffic facilities.

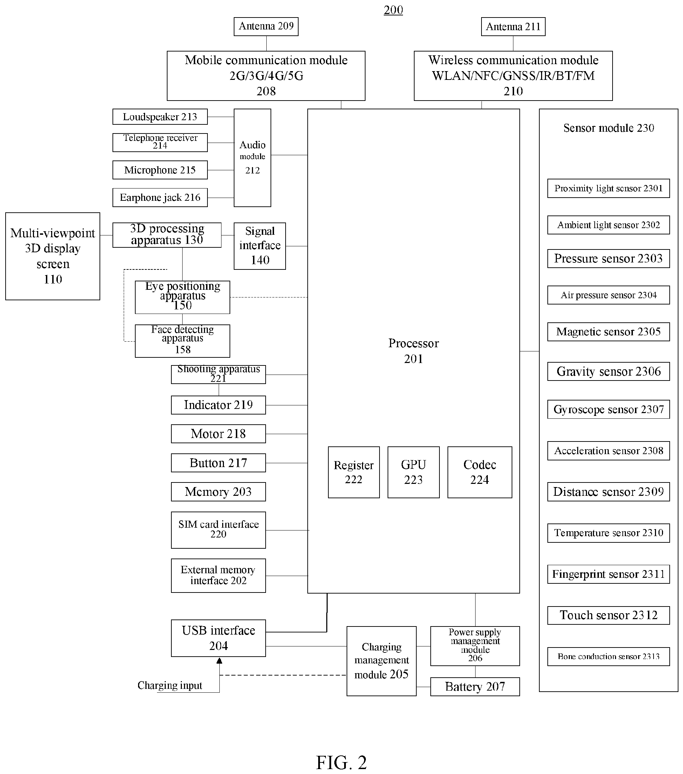

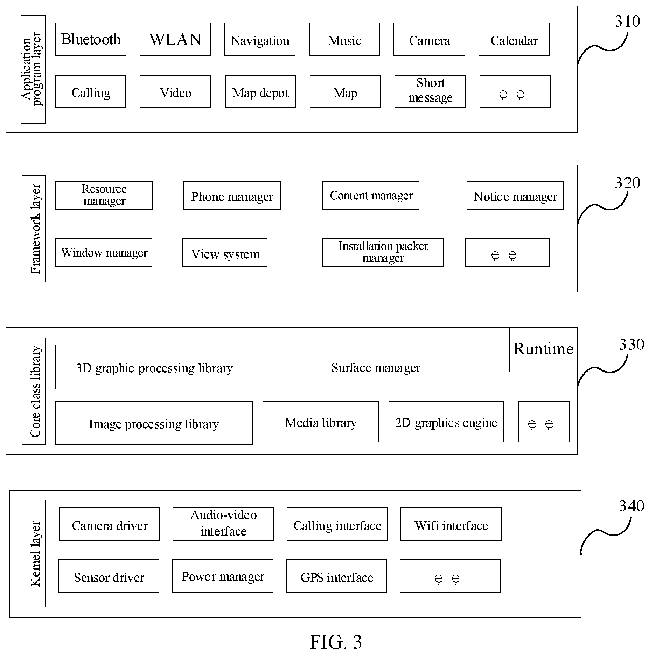

For simplicity, hereinafter, exemplary embodiments of the 3D display device internally comprise the processor. Then, the video signal interface 140 is constructed as an internal interface for connecting the processor 101 and the 3D processing apparatus 130, and the structure may be understood more clearly with reference to a 3D display device 200 implemented in a mobile terminal manner, which is shown in Fig. 2 and Fig. 3. In some embodiments, the video signal interface 140 serving as an internal interface of the 3D display device 200 may be a Mobile Industry Processor Interface (MIPI), a mini-MIPI, a Low Voltage Differential Signaling (LVDS) interface, a min-LVDS interface or a Display Port interface. In some embodiments, as shown in Fig. 1A, the processor 101 of the 3D display device 100 may further comprise a register 122. The register 122 may be used for temporarily storing instructions, data and addresses.

Continuing to refer to Fig. 1A, the 3D display device 100 further comprises an eye positioning apparatus 150 configured to acquire eye positioning data in real time, so that the 3D processing apparatus 130 may be configured to render corresponding subpixels in the composite pixels (composite subpixels) based on the eye positioning data. As shown in Fig. 1A, the eye positioning apparatus 150 is in communication connection to the 3D processing apparatus 130, so that the 3D processing apparatus 130 may be configured to directly receive the eye positioning data. In some other embodiments, an eye positioning data interface (not shown) is further arranged, the eye positioning apparatus may be directly connected with the processor of the 3D display device, and the 3D processing apparatus is configured to acquire the eye positioning data from the processor through the eye positioning data interface. In some other embodiments, the eye positioning apparatus may be simultaneously connected with the processor and the 3D processing apparatus, in the case, on one hand, the 3D processing apparatus may be configured to directly acquire the eye positioning data from the eye positioning apparatus, and on the other hand, other information acquired by the eye positioning apparatus may be processed by the processor.

In the embodiment shown in Fig. 1A, the eye positioning apparatus 150 is configured to acquire the eye positioning data in real time, and the 3D processing apparatus is configured to render the subpixels, determined by the eye positioning data acquired in real time, in each composite subpixel based on the images of the 3D signals.

Exemplarily, but not restrictively, the eye positioning apparatus may comprise two black and white cameras, an eye positioning image processor and the eye positioning data interface. In the case, a face image of a user can be shot at a high speed (in real time) by the two black and white cameras; the eye positioning image processor can be used for identifying both eyes of the user and calculating actual spatial positions, at which the both eyes are respectively located; and the obtained actual spatial positions, at which the both eyes are respectively located, can be transmitted through the eye positioning data interface.

In some embodiments, the 3D processing apparatus is configured to determine the viewpoints according to the spatial positions of the eyes. Optionally, determining the viewpoints according to the spatial positions of the eyes may also be realized by the eye positioning image processor of the eye positioning apparatus.

Fig. 1B shows a structural schematic diagram of the 3D display device according to the embodiments of the present disclosure. With reference to Fig. 1B, based on the 3D display device provided in Fig. 1A, the 3D display device 100 further comprises a face detecting apparatus 158, and the face detecting apparatus 158 has a visual identification function, for example, a face identification function, and is configured to detect face information of at least one user. The face detecting apparatus 158 may be connected to the eye positioning apparatus 150, and may also be connected to the 3D processing apparatus 130, to transmit the detected face information. Exemplarily, but not restrictively, the face detecting apparatus 158 may be arranged as an independent apparatus, may also be integrated in the eye positioning apparatus 150, may also be integrated in the processor 101 of the 3D display device 100, and may also be integrated in other parts with a similar function in the 3D display device.

In some embodiments, in the case of more than one user, for example, two users, the face detecting apparatus is configured to detect face information of the two users, and the eye positioning apparatus is configured to acquire viewpoint positions, at which both eyes of each of the two users are located, in real time. The 3D processing apparatus is configured to render the subpixels of each composite subpixel based on the images of the 3D signals according to the viewpoint positions, at which the both eyes of each of the two users are located.

In some embodiments, when the viewpoint positions, at which the both eyes of each of the more than one user, for example the two users, are located, detected by the face detecting apparatus and the eye positioning apparatus, have a conflict, in the case, for example that a left eye of a user and a right eye of the other user are located at a same viewpoint position, 2D display is presented for the users by the multi-viewpoint 3D display screen.

In the embodiments of the present disclosure, the multi-viewpoint 3D display screen 110 may define six viewpoints VI-V6, and the eyes of the user may view display of the corresponding subpixels in the composite subpixels of each composite pixel in the display panel of the multi-viewpoint 3D display screen 110 at each viewpoint (spatial position). Two different images viewed by the both eyes of the user at different viewpoints form a parallax, and a 3D image is composited in a brain.

Exemplarily, the 3D processing apparatus 130 is configured to receive images of uncompressed 3D signals from the processor 101 through the video signal interface 140 serving as the internal interface. Each image of the 3D signals may be two images with the (signals) resolution of m×n or a composite image with the (signals) resolution of 2m×n or m×2n.

In some embodiments, the two images or the composite image may comprise different types of images and may be in various arrangement forms. Exemplarily, the two images with the (signals) resolution of m×n may be in a parallel format or in an up-down format. The two images may respectively be a left eye parallax image and a right eye parallax image, and may also respectively be a rendered color image and a depth-of-field image. Exemplarily, the composite image with the (signals) resolution of 2m×n or m×2n may be in a left-right interlaced format, an up-down interlaced format or a checkerboard format. The composite image may be an interlaced left eye and right eye parallax composite image, and may also be an interlaced rendered color and depth-of-field composite image.

Those skilled in the art should understand that the above image types or arrangement forms are only schematic, and the images of the 3D signals may comprise other types of images and may be in other arrangement forms, which falls into the scope of the embodiments of the present disclosure.

Exemplarily, but not restrictively, the 3D processing apparatus 130 is configured to receive the two images with the (signals) resolution of m×n, of the 3D signals through the video signal interface 140, and namely, the (signals) resolution of m×n of each image is consistent with the display resolution of m×n, provided by the composite pixels divided according to the viewpoints, of the multi-viewpoint 3D display screen 110.

Exemplarily, but not restrictively, the 3D processing apparatus 130 is configured to receive the composite image with the (signals) resolution of 2m×n or m×2n, of the 3D signals through the video signal interface 140, and namely, a half of the (signals) resolution of the composite image is consistent with the display resolution of m×n, provided by the composite pixels divided according to the viewpoints, of the multi-viewpoint 3D display screen 110.

In the case, on the one hand, as information of the viewpoints is unrelated to a transmission process, the 3D display with a small calculating amount of processing and non-damaged resolution can be realized; and on the other hand, as the composite pixels (composite subpixels) are arranged correspondingly to the viewpoints, the rendering for the display screen can be realized in a 'point-to-point' manner, thereby greatly reducing the calculating amount. By contrast, the transmission and display of images or videos of a conventional 3D display are still performed based on a 2D display panel, the problems of reduction of the resolution and sharp increase of a calculating amount of rendering exist, and the problems of multiple times of format adjustment and display adaptation of the images or the videos further exist probably.

In some embodiments, the register 122 of the processor 101 may be used for receiving information related to display requirements of the multi-viewpoint 3D display screen 110, and the information is typically information unrelated to the i viewpoints and related to the display resolution of m×n of the multi-viewpoint 3D display screen 110, so that the processor 101 is configured to send the images of the 3D signals according with the display requirements thereof to the multi-viewpoint 3D display screen 110. For example, the information may be a data packet used for initially establishing video transmission and sending.

Therefore, when the images of the 3D signals are transmitted, the processor 101 does not need to consider the information related to the i viewpoints of the multi-viewpoint 3D display screen 110 (i>3). However, the processor 101 can be configured to send the images of the 3D signals according with the requirements thereof to the multi-viewpoint 3D display screen 110 by virtue of the information, related to the resolution of m×n of the multi-viewpoint 3D display screen 110, received by the register 122.

In some embodiments, the 3D display device 100 may further comprise a codec, configured to un-compress and code/decode compressed 3D signals and send the uncompressed 3D signals to the 3D processing apparatus 130 through the video signal interface 140.

In some embodiments, the processor 101 of the 3D display device 100 is configured to read the images of the 3D signals from a memory or receive the images of the 3D signals from out of the 3D display device 100, for example through an external interface, and transmit the read or received images of the 3D signals to the 3D processing apparatus 130 through the video signal interface 140.

In some embodiments, the 3D display device 100 further comprises a format adjuster (not shown), for example, integrated into the processor 101, constructed as the codec or serving as a part of a Graphic Processing Unit (GPU), and used for preprocessing the images of the 3D signals, so that the two images included therein have the (signals) resolution of m×n or the composite image included therein has the (signals) resolution of 2m×n or m×2n.

In some embodiments, the 3D processing apparatus 130 is configured to render the subpixels, corresponding to a single viewpoint, in each composite subpixel in response to that one of both eyes of each user is located at the single viewpoint or the both eyes are respectively located at the single viewpoint.

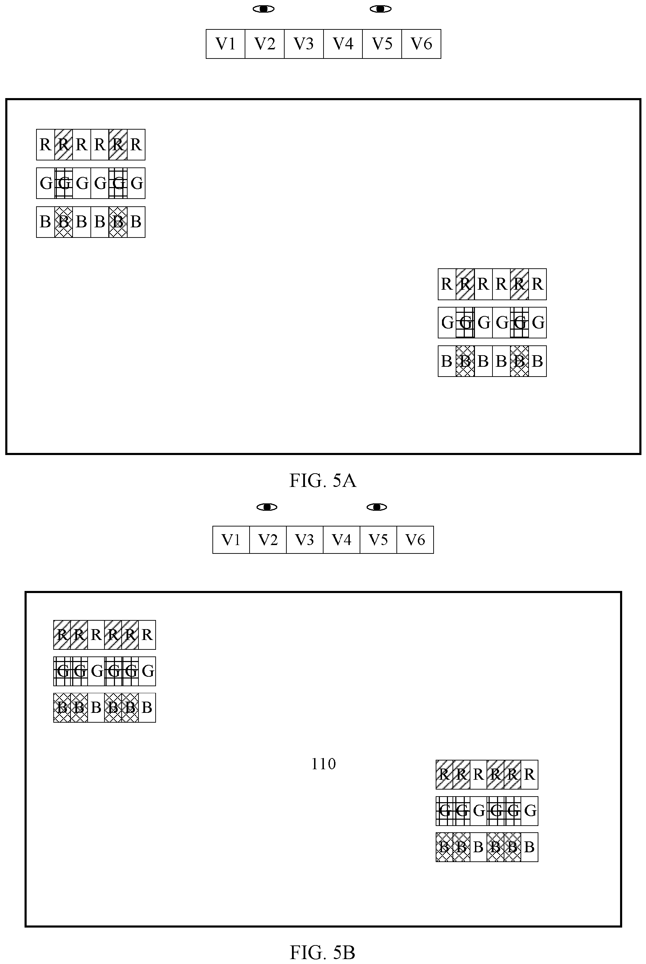

With reference to Fig. 5A, in an embodiment which is shown, a right eye of a user is located at a second viewpoint V2, a left eye is located at a fifth viewpoint V5, and the subpixels, corresponding to the two viewpoints V2 and V5, in the composite subpixels are rendered based on the images of the 3D signals. The both eyes of the user view two different images at the two viewpoints, so as to form a parallax, and a 3D image is composited in a brain.

In some embodiments, the 3D processing apparatus 130 is configured to render the subpixels, corresponding to a single viewpoint, in each composite subpixel, and further render one or two subpixels, which is/are adjacent to the subpixels corresponding to the single viewpoint in response to that one of both eyes of each user is located at the single viewpoint or the both eyes are respectively located at the single viewpoint.

With reference to Fig. 5B, in an embodiment which is shown, a right eye of a user is located at a second viewpoint V2; a left eye is located at a fifth viewpoint V5; and based on the images of the 3D signals, the subpixels, corresponding to the two viewpoints V2 and V5, in the composite subpixels are rendered, and the subpixel, corresponding to a viewpoint V1 adjacent to the viewpoint V2, and the subpixel, corresponding to a viewpoint V4 adjacent to the viewpoint V5 are further rendered. In some other embodiments that are not shown, the subpixels, corresponding to two viewpoints, which are adjacent to one of the two viewpoints V2 and V5 or respectively adjacent to the two viewpoints V2 and V5, may also be rendered.

In some embodiments, the multi-viewpoint 3D display screen may comprise a self-luminous display panel, for example a MICRO-LED display panel. In some embodiments, the self-luminous display panel, for example the MICRO-LED display panel, is configured as that the subpixels, which are not rendered, do not shine. For a multi-viewpoint Ultra High Definition (UHD) display, the power consumed by the display screen can be greatly saved.

In some embodiments, the 3D processing apparatus 130 is configured to render the subpixels, corresponding to viewpoints stretched across, in each composite subpixel in response to that one of the both eyes of each user stretches across the viewpoints or the both eyes stretch across the viewpoints.

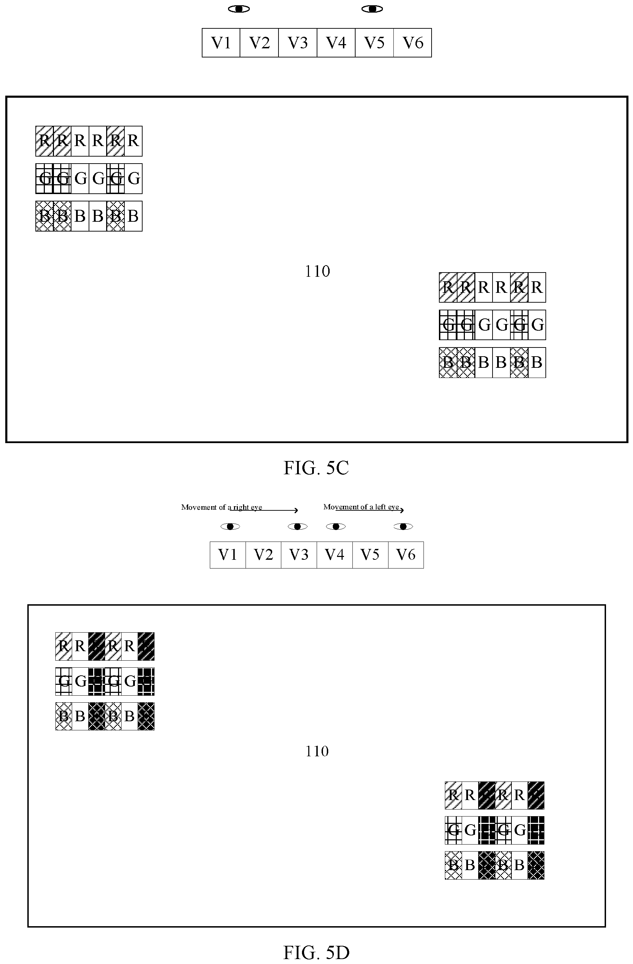

With reference to Fig. 5C, in an embodiment which is shown, a right eye of a user stretches across two viewpoints V1 and V2; a left eye is located at a fifth viewpoint V5; and based on the images of the 3D signals, the subpixels, corresponding to the two viewpoints V1 and V2 stretched across, in the composite subpixels are rendered, and the subpixel, corresponding to the single viewpoint V5 is rendered. Therefore, the both eyes of the user, located between the viewpoints V1 and V2 and at the viewpoint V5, can view rendered images from different angles to generate a parallax, so as to form a 3D effect of 3D display.

In some embodiments, the 3D processing apparatus 130 is configured to render the subpixels, corresponding to the viewpoint positions moving along with the both eyes of the user, in each composite subpixel in response to that the viewpoint positions, at which one of the both eyes of the user or the both eyes is/are located, move.

With reference to Fig. 5D, in an embodiment which is shown, a right eye of a user moves from a viewpoint V1 to a viewpoint V3, a left eye moves from a viewpoint V4 to a viewpoint V6, and the viewpoints, corresponding to the rendered subpixels, in the composite subpixels are correspondingly changed from V1 and V4 to V3 and V6. Therefore, the eyes of the user, which are in a moving state, can still view rendered images from different angles in real time to generate a parallax, so as to form a 3D effect of 3D display.

In some embodiments, the 3D processing apparatus 130 is configured to render the subpixels, corresponding to the viewpoint positions, at which the both eyes of each of the at least two users are located, in each composite subpixel in response to the viewpoint positions, at which both eyes of each of at least two users are located.

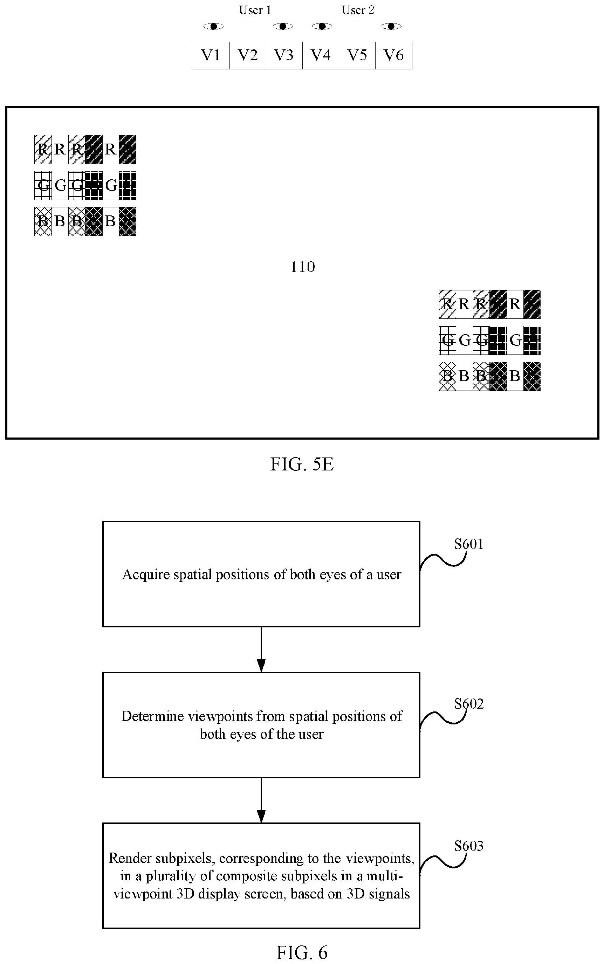

With reference to Fig. 5E, in an embodiment which is shown, two users exist; both eyes of a user 1 are respectively located at viewpoints V1 and V3; both eyes of a user 2 are respectively located at viewpoints V4 and V6; and the subpixels, corresponding to the four viewpoint positions, in each composite subpixel are rendered. Therefore, each user may view a rendered image corresponding to the own viewing angle to generate a parallax, so as to form a 3D effect of 3D display.

As described above, the 3D display device provided by the embodiments of the present disclosure may be a 3D display device including a processor. In some embodiments, the 3D display device may be constructed as an intelligent cell phone, a tablet computer, a smart television, a wearable device, a vehicle-mounted device, a laptop, an Ultra-Mobile Personal Computer (UMPC), a netbook, a Personal Digital Assistant (PDA) and so on.

Exemplarily, Fig. 2 shows a structural schematic diagram of hardware of the 3D display device 200 implemented as a mobile terminal, such as the intelligent cell phone or the tablet computer. The 3D display device 200 may comprise a processor 201, an external memory interface 202, a (internal) memory 203, a USB interface 204, a charging management module 205, a power supply management module 206, a battery 207, a mobile communication module 208, a wireless communication module 210, antennas 209 and 211, an audio module 212, a loudspeaker 213, a telephone receiver 214, a microphone 215, an earphone jack 216, a button 217, a motor 218, an indicator 219, a SIM card interface 220, a shooting apparatus 221, the multi-viewpoint 3D display screen 100, the 3D processing apparatus 130, the video signal interface 140, the eye positioning apparatus 150, the face detecting apparatus 158, a sensor module 230 and so on. The sensor module 230 may comprise a proximity light sensor 2301, an ambient light sensor 2302, a pressure sensor 2303, an air pressure sensor 2304, a magnetic sensor 2305, a gravity sensor 2306, a gyroscope sensor 2307, an acceleration sensor 2308, a distance sensor 2309, a temperature sensor 2310, a fingerprint sensor 2311, a touch sensor 2312, a bone conduction sensor 2313 and so on.

It may be understood that the schematic structures of the embodiments of the present disclosure do not form specific limit to the 3D display device 200. In some other embodiments, the 3D display device 200 may comprise components more or less than the components shown in the drawings, or certain components are combined, or certain components are split, or different components are arranged. The components shown in the drawings may be realized by the hardware, software or the combination of the software and the hardware.

The processor 201 may comprise one or more processing units, and for example, the processor 201 may comprise an Application Processor (AP), a modulation-demodulation processor, a baseband processor, a register 222, a GPU 223, an Image Signal Processor (ISP), a controller, a memory, a codec 224, a Digital Signal Processor (DSP), a baseband processor, a Neural Network Processing Unit (NPU) and so on or the combination thereof, wherein different processing units may be independent apparatuses, and may also be integrated in one or more processors.

The processor 201 may be further provided with a high-speed buffer, configured to store instructions or data just used or recycled by the processor 201. If the processor 201 needs to use the instructions or the data again, the instructions or the data may be directly called from the memory.

In some embodiments, the processor 201 may comprise one or more interfaces. The interface may comprise an integrated circuit (I2C) interface, an integrated circuit built-in audio (I2S) interface, a Pulse Code Modulation (PCM) interface, a Universal Asynchronous Receiver/Transmitter (UART) interface, a Mobile Industry Processor Interface (MIPI), a General Purpose Input/Output (GPIO) interface, a SIM interface, a USB interface and so on.

The I2C interface is a two-way synchronous serial bus, and comprises a Serial Data Line (SDA) and a Serial Clock Line (SCL). In some embodiments, the processor 201 may include a plurality of groups of I2C buses. The processor 201 may be in communication connection with the touch sensor 2312, a charger, a flash lamp, the shooting apparatus 221, the eye positioning apparatus 150, the face detecting apparatus 158 and so on through different I2C bus interfaces respectively.

In an embodiment shown in Fig. 2, the MIPI interface may be configured to connect the processor 201 and the multi-viewpoint 3D display screen 110. Additionally, the MIPI interface may also be configured to connect peripheral apparatuses, such as the shooting apparatus 221, the eye positioning apparatus 150, the face detecting apparatus 158 and so on.

It may be understood that schematic interface connection relationships between the modules in the embodiments of the present disclosure are only the schematic description, and do not form the limit to the structure of the 3D display device 200.

A wireless communication function of the 3D display device 200 may be realized by the antennas 209 and 211, the mobile communication module 208, the wireless communication module 210, the modulation-demodulation processor or the baseband processor and so on.

The antennas 209 and 211 are configured to emit and receive electromagnetic wave signals. Each antenna in the 3D display device 200 may be configured to cover single or more communication bands. Different antennas may be further reused, so as to improve the utilization rate of the antennas.

The mobile communication module 208 may provide a solution of wireless communication, comprising 2G/3G/4G/5G and the like, applied on the 3D display device 200. In some embodiments, at least part of functional modules of the mobile communication module 208 may be arranged in the processor 201. In some embodiments, at least part of functional modules of the mobile communication module 208 and at least part of modules of the processor 201 may be arranged in a same apparatus.

The wireless communication module 210 may provide a solution of wireless communication, comprising a Wireless Local Area Network (WLAN), Bluetooth (BT), a Global Navigation Satellite System (GNSS), Frequency Modulation (FM), a Near Field Communication (NFC) technology, an Infrared Radiation (IR) technology and the like, applied on the 3D display device 200. The wireless communication module 210 may be one or more apparatuses integrated with at least one communication processing module.

In some embodiments, the antenna 209 of the 3D display device 200 is coupled with the mobile communication module 208, and the antenna 211 is coupled with the wireless communication module 210, so that the 3D display device 200 may realize communication with a network and other devices through a wireless communication technology. The wireless communication technology may comprise at least one of a Global System for Mobile Communications (GSM), a General Packet Radio Service (GPRS), Code Division Multiple Access (CDMA), Wideband Code Division Multiple Access (WCDMA), Time Division-Synchronization Code Division Multiple Access (TD-SCDMA), Long Term Evolution (LTE), the BT, the GNSS, the WLAN, the NFC, the FM, or the IR technology and the like.

In some embodiments, the external interface configured to receive 3D signals may comprise the USB interface 204, the mobile communication module 208, the wireless communication module 210 or the combination thereof. Additionally, it may be further thought of other feasible interfaces configured to receive the 3D signals, for example the above mentioned interfaces.

The memory 203 may be configured to store computer-executable program codes, and the executable program codes comprise instructions. The processor 201 is configured to operate the instructions stored in the memory 203, so as to execute various function applications and data processing of the 3D display device 200.

The external memory interface 202 may be configured to connect an external storage card, such as a Micro SD (Secure Digital) card, so as to extend the storage capacity of the 3D display device 200. The external storage card is in communication with the processor 201 through the external memory interface 202, so as to realize a data storage function.

In some embodiments, the memory of the 3D display device may comprise the (internal) memory 203, the external storage card connected with the external memory interface 202 or the combination thereof. In some other embodiments of the present disclosure, the video signal interface may also adopt different internal interface connection manners in the above embodiments or the combination thereof.

In the embodiments of the present disclosure, the shooting apparatus 221 may be configured to collect images or videos.

In some embodiments, the 3D display device 200 realizes a display function through the video signal interface 140, the 3D processing apparatus 130, the multi-viewpoint 3D display screen 110, the AP and so on.

In some embodiments, the 3D display device 200 may comprise the GPU 223, and for example, configured to process 3D video images in the processor 201, and may also be configured to process 2D video images.

In some embodiments, the 3D display device 200 further comprises the codec 224, configured to compress or un-compress digital videos, for example the 3D signals.

In some embodiments, the video signal interface 140 is configured to output the 3D signals, for example images of uncompressed 3D signals, processed by the GPU or the codec 224 or the GPU and the codec 224, to the 3D processing apparatus 130.

In some embodiments, the GPU or the codec 224 is integrated with a format adjuster.

The multi-viewpoint 3D display screen 110 is configured to display 3D images or videos and the like. The multi-viewpoint 3D display screen 110 comprises the display panel. The display panel may adopt a Liquid Crystal Display (LCD), an Organic Light Emitting Diode (OLED), an Active Matrix/Organic Light Emitting Diode (AMOLED), a Flexible Light Emitting Diode (FLED), a Mini-LED, a Micro-LED, a Micro-OLED, a Quantum Dot Light Emitting Diode (QLED) and the like.

In some embodiments, the 3D display device 200 further comprises the eye positioning apparatus 150 configured to acquire eye positioning data in real time, so that the 3D processing apparatus 130 may be configured to render corresponding subpixels of composite pixels (composite subpixels) based on the eye positioning data. Exemplarily, the eye positioning apparatus 150 is in communication connection with the 3D processing apparatus 130, and may also be in communication connection with the processor 201, and for example, a bypass is connected with the processor 201. Exemplarily, the eye positioning apparatus 150 may be simultaneously connected with the processor 201 and the 3D processing apparatus 130.

In some embodiments, the 3D display device 200 further comprises the face detecting apparatus 158. The face detecting apparatus 158 has a visual identification function, for example, a face identification function, and is configured to detect face information of at least one user. The face detecting apparatus 158 may be connected to the eye positioning apparatus 150, and may also be connected to the 3D processing apparatus 130, to transmit the detected face information.

The 3D display device 200 may realize an audio function through the audio module 212, the loudspeaker 213, the telephone receiver 214, the microphone 215, the earphone jack 216, the AP and so on.

The button 217 comprises a power button, a volume button and the like. The button 217 may be a mechanical button, and may also be a touch button. The 3D display device 200 may be configured to receive button input, so as to generate button signal input related to user settings and functional control of the 3D display device 200.

The motor 218 may generate a vibration alert. The motor 218 may be configured to provide the vibration alert for calls, and may also be configured to provide touch vibration feedback.

The SIM card interface 220 is configured to connect an SIM card. In some embodiments, the 3D display device 200 adopts an eSIM, i.e. an embedded SIM card.

The ambient light sensor 2302 is configured to perceive a situation of ambient light. For example, the brightness of the display screen may be adjusted accordingly. Exemplarily, when both eyes of a user are respectively located in a single viewpoint, and a situation that the brightness of an external environment is higher, is detected by the ambient light sensor 2302, the 3D processing apparatus 130 is configured to render the subpixels, corresponding to the single viewpoint, in each composite subpixel, and further render one or two subpixels, which is/are adjacent to the subpixels corresponding to the single viewpoint, so as to enhance the display brightness and adapt to a high light environment.

The pressure sensor 2303 is configured to feel pressure signals, and may be configured to convert the pressure signals into electrical signals. In some embodiments, the pressure sensor 2303 may be arranged in the multi-viewpoint 3D display screen 110, which falls into the scope of the embodiments of the present disclosure.

The air pressure sensor 2304 is configured to measure air pressure.

The magnetic sensor 2305 comprises a Hall sensor.

The gravity sensor 2306 is a sensor for converting movement or gravity into electrical signals, and is mainly configured to measure parameters such as an inclination angle, inertia force, impact, vibration and the like.

The gyroscope sensor 2307 may be configured to determine a moving posture of the 3D display device 200.

The acceleration sensor 2308 may be configured to detect the size of an accelerated speed, in each direction, of the 3D display device 200 (three axes in general).

The distance sensor 2309 may be configured to measure a distance.

The temperature sensor 2310 may be configured to detect temperature.

The fingerprint sensor 2311 is configured to collect fingerprints.

The touch sensor 2312 may be arranged in the multi-viewpoint 3D display screen 110, and the touch sensor 2312 and the multi-viewpoint 3D display screen 110 form a touch screen, also called 'a touch control screen'.

The bone conduction sensor 2313 may be configured to acquire vibration signals.

The charging management module 205 is configured to receive charging input from the charger, wherein the charger may be a wireless charger, and may also be a wired charger.

The power supply management module 206 is configured to connect the battery 207, the charging management module 205 and the processor 201.

A software system of the 3D display device 200 may adopt a layered architecture, an event-driven architecture, a micro-kernel architecture, a micro-service architecture, or a cloud architecture. The embodiments shown in the present disclosure take an Android system in the layered architecture as an example, and exemplarily illustrate a software structure of the 3D display device 200. However, it may be thought of that the embodiments of the present disclosure may be implemented in different software systems, such as an operating system.

Fig. 3 is a structural schematic diagram of software of the 3D display device 200 according to the embodiments of the present disclosure. The software is divided into a plurality of layers by the layered architecture. The communication between the layers is realized through a software interface. In some embodiments, the Android system is divided into four layers, comprising an application program layer 310, a framework layer 320, a core class library and runtime 330 and a kernel layer 340 from top to bottom in sequence.

The application program layer 310 may comprise a series of application program packets. As shown in Fig. 3, the application program packets may comprise application programs such as BT, WLAN, navigation, music, a camera, a calendar, calling, a video, a map depot, a map, a short message and so on. For example, a 3D video display method may be implemented in a video application program.

The framework layer 320 is configured to provide Application Programming Interfaces (APIs) and programming frameworks for the application programs of the application program layer. The framework layer comprises some predefined functions. For example, in some embodiments of the present disclosure, functions or algorithms for identifying the acquired 3D video images, algorithms for processing the images and the like may be comprised in the framework layer.

As shown in Fig. 3, the framework layer 320 may comprise a resource manager, a phone manager, a content manager, a notice manager, a window manager, a view system, an installation packet manager and so on.

Android Runtime comprises a core library and a virtual machine. The Android Runtime is in charge of scheduling and management of the Android system.

The core library includes two parts: one part is a functional function that a java language needs to call, and the other part is an Android core library.

The application program layer and the framework layer operate in the virtual machine. The virtual machine is configured to execute java files of the application program layer and the framework layer to binary files. The virtual machine is configured to execute functions such as management for an object life cycle, stack management, thread management, management for security and abnormity, garbage collection and so on.

The core class library may comprise a plurality of functional modules, such as a 3D graphic processing library (such as an Open Graphics Library Expert System (OpenGL ES)), a surface manager, an image processing library, a media library, a graphics engine (such as a Skia Graphics Library (SGL)) and the like.

The kernel layer 340 is a layer between the hardware and the software. The kernel layer at least includes a camera driver, an audio-video interface, a calling interface, a Wifi interface, a sensor driver, power management and a GPS interface.

Here, the 3D display device, serving as the mobile terminal, in a structure shown in Fig. 2 and Fig. 3 is taken as an example, and an embodiment of 3D video transmission and display in the 3D display device is described; however, it may be thought of that more or less characteristics may be comprised in some other embodiments, or the characteristics therein are changed.

In some embodiments, for example, the 3D display device 200, such as the intelligent cell phone or the tablet computer, serving as the mobile terminal, is configured to receive, for example the compressed 3D signals, from the network, such as a cellular network, a WLAN network and BT, for example by virtue of the mobile communication module 208 and the antenna 209 or the wireless communication module 210 and the antenna 221, serving as external interfaces; image processing is performed for the compressed 3D signals, for example by the GPU 223, and the processed 3D signals are coded/decoded and uncompressed by the codec 224; then the uncompressed 3D signals are sent to the 3D processing apparatus 130, for example through the video signal interface 140, such as the MIPI interface or the mini-MIPI interface, serving as the internal interface; and each image of the uncompressed 3D signals comprises two images or a composite image of the embodiments of the present disclosure. Then, the 3D processing apparatus 130 is configured to correspondingly render the subpixels in the composite subpixels of the display screen, so as to realize 3D video playing.

In some other embodiments, the 3D display device 200 is configured to read the (internal) memory 203 or read the compressed 3D signals stored in the external storage card by the external memory interface 202, and the 3D video playing is realized through corresponding processing, transmission and rendering.

In some embodiments, the above mentioned 3D video playing is implemented in the video application program of the application program layer 310 of the Android system.

The embodiments of the present disclosure further provide a 3D display method used for the multi-viewpoint 3D display screen. The multi-viewpoint 3D display screen comprises m×n composite pixels, wherein each composite pixel comprises a plurality of composite subpixels, each composite subpixel comprises i subpixels of the same color, corresponding to i viewpoints, and i>3.

With reference to Fig. 6, in some embodiments, a 3D display method comprises:
S601: acquiring spatial positions of both eyes of a user;
S602: determining viewpoints according to the spatial positions of the both eyes of the user;
S603: rendering subpixels, corresponding to the viewpoints, in a plurality of composite subpixels in the multi-viewpoint 3D display screen based on 3D signals.

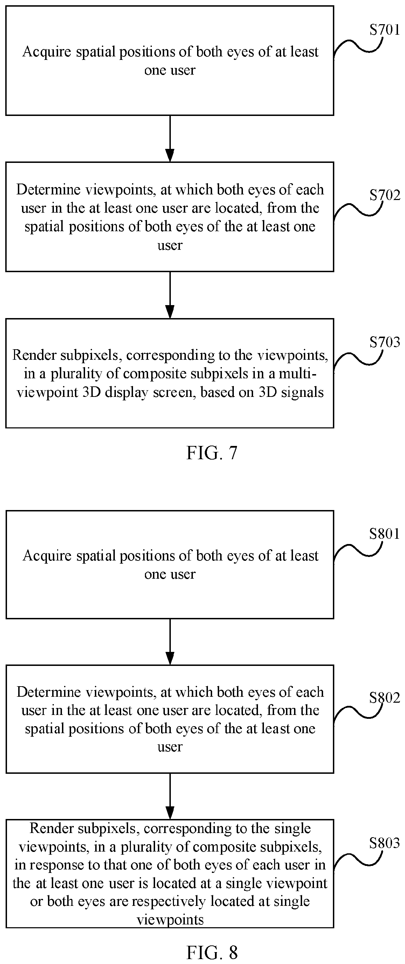

With reference to Fig. 7, in some embodiments, a 3D display method comprises:
S701: acquiring spatial positions of both eyes of at least one user;
S702: determining viewpoints, at which the both eyes of each user in the at least one user are located, according to the spatial positions of the both eyes of the at least one user;
S703: rendering subpixels, corresponding to the viewpoints, in a plurality of composite subpixels in the multi-viewpoint 3D display screen based on 3D signals.

With reference to Fig. 8, in some embodiments, a 3D display method comprises:
S801: acquiring spatial positions of both eyes of at least one user;
S802: determining viewpoints, at which the both eyes of each user in the at least one user are located, according to the spatial positions of the both eyes of the at least one user;
S803: in response to that one of the both eyes of each user in the at least one user is located at a single viewpoint or the both eyes are respectively located at a single viewpoint, rendering subpixels, corresponding to the single viewpoint, in a plurality of composite subpixels.

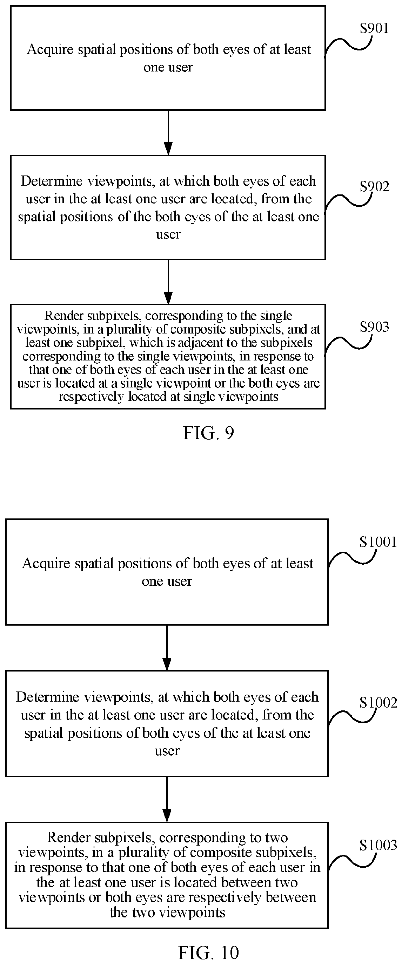

With reference to Fig. 9, in some embodiments, a 3D display method comprises:
S901: acquiring spatial positions of both eyes of at least one user;
S902: determining viewpoints, at which the both eyes of each user in the at least one user are located, according to the spatial positions of the both eyes of the at least one user;
S903: in response to that one of the both eyes of each user in the at least one user is located at a single viewpoint or the both eyes are respectively located at a single viewpoints, rendering subpixels, corresponding to the single viewpoint, in a plurality of composite subpixels, and at least one subpixel, which is adjacent to the subpixels corresponding to the single viewpoint.

With reference to Fig. 10, in some embodiments, a 3D display method comprises:
S1001: acquiring spatial positions of both eyes of at least one user;
S1002: determining viewpoints, at which the both eyes of each user in the at least one user are located, according to the spatial positions of the both eyes of the at least one user;
S1003: in response to that one of the both eyes of each user in the at least one user is located between two viewpoints or the both eyes are respectively between the two viewpoints, rendering subpixels, corresponding to the two viewpoints, in a plurality of composite subpixels.

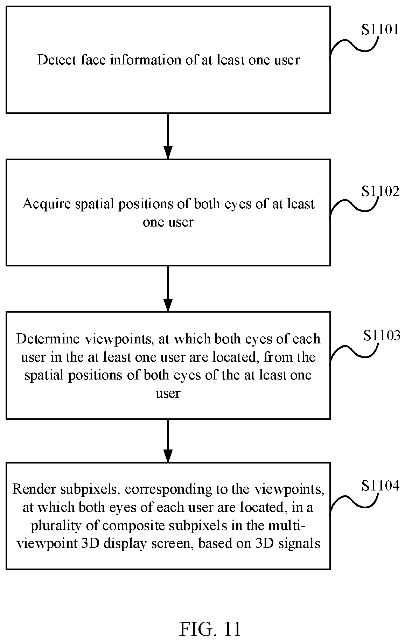

With reference to Fig. 11, in some embodiments, a 3D display method comprises:
S1101: detecting face information of at least one user;
S1102: acquiring spatial positions of both eyes of the at least one user;
S1103: determining viewpoints, at which the both eyes of each user in the at least one user are located, according to the spatial positions of the both eyes of the at least one user;
S1104: rendering subpixels, corresponding to the viewpoints, at which the both eyes of each user are located, in a plurality of composite subpixels in the multi-viewpoint 3D display screen based on 3D signals.

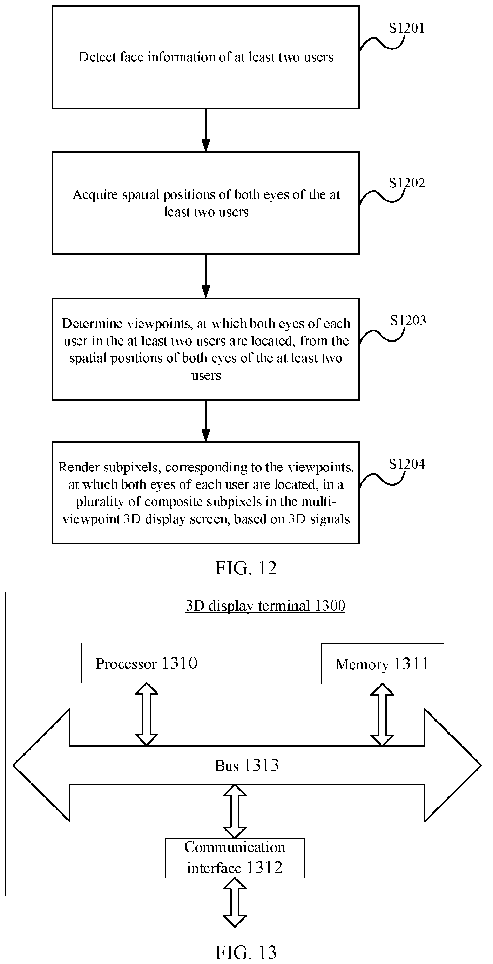

With reference to Fig. 12, in some embodiments, a 3D display method comprises:
S1201: detecting face information of at least two users;
S1202: acquiring spatial positions of both eyes of the at least two users;
S1203: determining viewpoints, at which the both eyes of each user in the at least two users are located, according to the spatial positions of the both eyes of the at least two users;
S1204: rendering subpixels, corresponding to the viewpoints, at which the both eyes of each user are located, in a plurality of composite subpixels in the multi-viewpoint 3D display screen based on 3D signals.

The embodiments of the present disclosure provide a 3D display terminal 1300, with reference to Fig. 13, the 3D display terminal comprises:
a processor 1301 and a memory 1311, and may further comprise a communication interface 1312 and a bus 1313, wherein the processor 1301, the communication interface 1312 and the memory 1311 complete mutual communication by the bus 1313. The communication interface 1312 may be configured to transmit information. The processor 1301 may be configured to call logic instructions in the memory 1311, so as to execute the 3D display method in the above embodiments.

Additionally, the logic instructions in the above mentioned memory 1311 may be realized in a form of a software function unit, and when the logic instructions are sold or used as independent products, the logic instructions may be stored in a computer-readable storage medium.

The memory 1311, serving as the computer-readable storage medium, may be configured to store a software program and a computer-executable program, such as program instructions/modules corresponding to the method in the embodiments of the present disclosure. The processor 1301 is configured to operate the program instructions/modules stored in the memory 1311, so as to execute function applications and data processing, and namely, the 3D display method in the above method embodiments is realized.

The memory 1311 may comprise a program storage region and a data storage region, wherein the program storage region may store an operating system and application programs required by at least one function; the data storage region may store data created according to the use of a terminal device, and the like. In addition, the memory 1311 may comprise a high-speed RAM, and may further comprise an NVM.

The computer-readable storage medium provided by the embodiments of the present disclosure stores computer-executable instructions; and the computer-executable instructions are configured to implement the 3D display method.

The computer program product provided by the embodiments of the present disclosure comprises computer programs stored in the computer-readable storage medium; and the computer programs comprise program instructions, and make a computer execute the 3D image display method when the program instructions are executed by the computer.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a RAM, a diskette or an optical disk, and may also be a transient storage medium.

The system, the equipment, the devices, the modules or the units illustrated in the above embodiments may be realized by each type of possible entity. A typical realizing entity is the computer or the processor thereof or other components. The computer, for example, may be the personal computer, a laptop computer, vehicle-mounted human-computer interaction equipment, the cell phone, a camera phone, an intelligent phone, the PDA, a media player, navigation equipment, E-mail equipment, a game console, the tablet computer, the wearable equipment, the smart television, an Internet of Things (IoT) system, smart home, an industrial computer, a singlechip system or a combination thereof. In a typical configuration, the computer may comprise one or more Central Processing Units (CPUs), an input/output interface, a network interface and a memory. The memory probably comprises a volatile memory, an RAM and/or a nonvolatile memory and other forms in a computer-readable medium, such as a Read Only Memory (ROM) or a flash RAM

The method, the programs, the equipment, the system, the devices and the like in the embodiments of the present invention may be executed or realized in one or more networked computers, and may also be implemented in distributed computing environments. In the embodiments of the description, in the distributed computing environments, tasks are executed by remote processing equipment connected by a communication network.

Those skilled in the art should understand that the embodiments of the description may provide the method, the system, the equipment or computer program products. Therefore, the embodiments of the description may adopt forms of full-hardware embodiments, full-software embodiments or embodiments combining software and hardware aspects.

Those skilled in the art may contemplate that the functional modules/units or the controller and related method steps, illustrated in the above embodiments, may be realized in a software manner, a hardware manner and a software/hardware combination manner, and for example, may be realized in a pure computer-readable program code manner; and logic programming can also be performed for part or all of the method steps to enable the controller to realize same functions by the hardware, comprising but not limited to a logic gate, a switch, a special integrated circuit, a Programmable Logic Controller (PLC) (such as the FPGA) and an embedded microcontroller.

In some embodiments of the present application, the components of the devices are described in a form of the functional modules/units. It may be contemplated that a plurality of functional modules/units are realized in one or more 'combined' functional modules/units and/or one or more software and/or hardware. It may also be contemplated that the single functional module/unit is realized by the combination of a plurality of sub-functional modules/sub-units and/or multiple software and/or hardware. The division of the functional modules/units may be only a logic function division, and in a specific realizing manner, the plurality of functional modules/units may be combined or may be integrated into another system and equipment. Additionally, the connection of the modules, the units, the devices, the systems, the equipment and the components thereof in the text comprises direct or indirect connection, covering feasible electrical, mechanical and communication connection, especially comprising wired or wireless connection between the interfaces of each type, comprising but not limited to a High-Definition Multimedia Interface (HDMI), thunders, the USB, the WiFi and the cellular network.

In the embodiments of the present application, the technical features, the flow charts and/or the block diagrams of the method and the programs may be applied in the corresponding devices, equipment and systems as well as the modules, the units and the components thereof. On the contrary, each embodiment and features of the devices, the equipment, the systems as well as the modules, the units and the components thereof may be applied in the method and the programs according to the embodiments of the present application. For example, a computer program instruction may be loaded in a general-purpose computer, a special computer, an embedded processor or a processor of other programmable data processing equipment to generate a machine which has corresponding functions or features realized in one program or more programs of the flow charts and/or one block or more blocks of the block diagrams.

The method and the programs according to the embodiments of the present application may be stored in a computer-readable memory or medium which can guide the computer or other programmable data processing equipment to work in a specific manner by way of the computer program instructions or programs. The embodiments of the present application also relate to the readable memory or medium which stores the method, the programs and the instructions which can implement the embodiments of the present application.

A storage medium comprises permanent and impermanent articles and mobile and immobile articles that may be used for realizing information storage by any method or technology. The information may be modules of a computer-readable instruction, a data structure and a program or other data. Examples of the storage medium comprise, but not limited to a Phase-Change Random Access Memory (PRAM), a Static Random Access Memory (SRAM), a Dynamic Random Access Memory (DRAM), other types of RAMs, ROMs, Electrically Erasable Programmable Read-Only Memories (EEPROMs), flash memories or other memory technologies, Compact Disc Read-Only Memories (CD-ROMs) and Digital Video Disks (DVDs) or other optical memories and magnetic cassette tapes, and tape disk storage equipment or other magnetic storage equipment or any other non-transmission medium may be configured to store information which may be accessed by calculating equipment.

Unless clearly pointed out, actions or steps of the method and the programs recorded according to the embodiments of the present application are not necessarily executed according to a specific sequence, and an expected result may still be realized. In some implementation manners, multitasking and parallel processing are also permissible or are probably favorable.

In the text, the specific features, structures, materials or characteristics of each embodiment may be combined in a proper manner in any one or more embodiments or examples. Additionally, under the condition of no mutual contradiction, those skilled in the art may combine and integrate different embodiments or examples and the features of the different embodiments or examples, which are described in the description.

The exemplary system, equipment and method of the present application are specifically shown and described with reference to the above embodiments, and are only optimal modes of examples for implementing the system, the equipment and the method. Those skilled in the art may understand that when the system, the equipment and/or the method is implemented, each change may be made to the embodiments of the system, the equipment and the method described here, without departing from the spirit and the scope, defined in the attached claims, of the present application. The attached claims are intended to define the scope of the system, the equipment and the method, and therefore, the system, the equipment and the method, falling in the claims and being equivalent thereto, may be covered.

## Claims

1. A 3D display device, comprising:
a multi-viewpoint 3D display screen, comprising a plurality of composite pixels, wherein each composite pixel in the plurality of composite pixels comprises a plurality of composite subpixels, and each composite subpixel in the plurality of composite subpixels comprises a plurality of subpixels corresponding to a plurality of viewpoints;
an eye positioning apparatus, configured to acquire spatial positions of eyes of a user;
a 3D processing apparatus, configured to determine viewpoints by spatial positions of eyes of the user, and render subpixels, corresponding to the viewpoints, in the plurality of composite subpixels based on received 3D signals.

2. The 3D display device according to claim 1, wherein the eye positioning apparatus is configured to acquire spatial positions of eyes of at least one user.

3. The 3D display device according to claim 2, wherein the 3D processing apparatus is configured to render subpixels, corresponding to a single viewpoint, in the plurality of composite subpixels in response to that one of both eyes of each user in the at least one user is located at the single viewpoint or both eyes are respectively located at the single viewpoint.

4. The 3D display device according to claim 3, wherein the 3D processing apparatus is further configured to:
render at least one subpixel, which is adjacent to subpixels corresponding to the single viewpoint.

5. The 3D display device according to claim 2, wherein the 3D processing apparatus is configured to render subpixels, corresponding to two viewpoints, in the plurality of composite subpixels in response to that one of both eyes of each user in the at least one user is located between the two viewpoints or both eyes are respectively located between the two viewpoints.

6. The 3D display device according to any one of claims 2-5, further comprising a face detecting apparatus, configured to detect face information of the at least one user.

7. The 3D display device according to claim 6, wherein the eye positioning apparatus is configured to acquire spatial positions of both eyes of each of at least two users.

8. The 3D display device according to any one of claims 1-5, wherein the 3D processing apparatus is a Field Programmable Gate Array (FPGA) chip or an Application Specific Integrated Circuit (ASIC) chip or an FPGA chipset or an ASIC chipset.

9. The 3D display device according to any one of claims 1-5, wherein each composite subpixel in the plurality of composite subpixels comprises a plurality of subpixels arranged in row or in column.

10. A 3D display method, comprising:
acquiring spatial positions of eyes of a user;
determining viewpoints by spatial positions of eyes of the user;
rendering subpixels, corresponding to the viewpoints, in a plurality of composite subpixels in a multi-viewpoint 3D display screen based on 3D signals;
wherein the multi-viewpoint 3D display screen comprises a plurality of composite pixels, each composite pixel in the plurality of composite pixels comprises a plurality of composite subpixels, and each composite subpixel in the plurality of composite subpixels comprises a plurality of subpixels corresponding to a plurality of viewpoints.

11. The method according to claim 10, wherein acquiring spatial positions of eyes of a user and determining viewpoints by spatial positions of eyes of the user comprises:
acquiring spatial positions of eyes of at least one user;
determining viewpoints, at which eyes of each user in the at least one user are located, by spatial positions of eyes of the at least one user.

12. The method according to claim 11, wherein rendering subpixels, corresponding to the viewpoints, in a plurality of composite subpixels in a multi-viewpoint 3D display screen based on 3D signals, comprises:
rendering subpixels, corresponding to a single viewpoint, in the plurality of composite subpixels in response to that one of both eyes of each user in the at least one user is located at the single viewpoint or both eyes are respectively located at the single viewpoint.

13. The method according to claim 11, wherein rendering subpixels, corresponding to the viewpoints, in a plurality of composite subpixels in a multi-viewpoint 3D display screen based on 3D signals, comprises:
rendering subpixels, corresponding to the single viewpoint, in the plurality of composite subpixels, and at least one subpixel, which is adjacent to subpixels corresponding to the single viewpoint in response to that one of both eyes of each user in the at least one user is located at a single viewpoint or both eyes are respectively located at a single viewpoint.

14. The method according to claim 11, wherein rendering subpixels, corresponding to the viewpoints, in a plurality of composite subpixels in a multi-viewpoint 3D display screen based on 3D signals, comprises:
rendering subpixels, corresponding to two viewpoints, in the plurality of composite subpixels in response to that one of both eyes of each user in the at least one user is located between the two viewpoints or both eyes are respectively located between the two viewpoints.

15. The method according to any one of claims 10-14, further comprising:
detecting face information of the at least one user.

16. The method according to claim 15, wherein detecting face information of the at least one user comprises: detecting face information of at least two users.

17. A 3D display terminal, comprising a processor and a memory in which program instructions are stored, and further comprising a multi-viewpoint 3D display screen, wherein the multi-viewpoint 3D display screen comprises a plurality of composite pixels, each composite pixel in the plurality of composite pixels comprises a plurality of composite subpixels, and each composite subpixel in the plurality of composite subpixels comprises a plurality of subpixels corresponding to a plurality of viewpoints; and the processor is configured to execute the method of any one of claims 10-16 when the program instructions are executed.

18. The 3D display terminal according to claim 17, wherein the 3D display terminal is a smart television, an intelligent cell phone, a tablet computer, a personal computer or a wearable device.

19. A computer-readable storage medium, storing computer-executable instructions, wherein the computer-executable instructions are configured to execute the method of any one of claims 10-16.

20. A computer program product, comprising computer programs stored in a computer-readable storage medium, wherein the computer programs comprise program instructions, and make a computer execute the method of any one of claims 10-16 when the program instructions are executed by the computer.
